# EUROPÄISCHE PATENTSCHRIFT

(11) **EP 1 046 343 B1**
(45) Veröffentlichungstag und Bekanntmachung des Hinweises auf die Patenterteilung: **29.05.2002**
(21) Anmeldenummer: 00108406.0
(22) Anmeldetag: 19.04.2000
(51) Int. Cl.: A23G 7/02

(54) **Verfahren und Vorrichtung zum Kühlen von Warenstücken, insbesondere von mit Schokolademasse überzogenen Süsswaren**
Method and device for cooling goods, in particular of chocolate coated sweets
Méthode et appareillage à frigorifier d'articles, en particulier de la confiserie enrobée de chocolat

(30) Priorität: 20.04.1999 DE 19917778
(43) Veröffentlichungstag der Anmeldung: 25.10.2000
(73) Patentinhaber: Sollich KG, 32105 Bad Salzuflen (DE)
(72) Erfinder: Laut, Reinhard, 32479 Hille (DE)
(74) Vertreter: Patentanwälte Rehberg + Hüppe

(56) Entgegenhaltungen:
- DE-A- 19 607 055
- DE-A- 19 724 639
- US-A- 4 142 376

## Beschreibung

Die Erfindung betrifft ein Verfahren zum Kühlen von Warenstücken, insbesondere von mit Schokolademasse überzogenen Süßwaren, indem die Warenstücke auf einem Transportband aufliegend durch einen Kühlkanal gefördert werden, die Warenstücke während ihres Durchlaufes durch den Kühlkanal einem vom Eingang des Kühlkanals bis zu dessen Ausgang reichenden Temperaturprofil ausgesetzt werden, welches über die Länge des Kühlkanals örtlich unterschiedlich durch Luft und/oder ein flüssiges Kühlmedium bereitgestellt wird, wobei das Kühlmedium unter Ausbildung mindestens zweier Kühlstrecken etwa im Mittelbereich des Kühlkanals mit je einer Eintrittstemperatur pro Kühlstrecke dem Kühlkanal zugeleitet wird. Die Erfindung zeigt auch eine Vorrichtung zur Durchführung des Verfahrens, mit einem Kühlkanal zum Kühlen von Warenstücken, insbesondere von mit Schokolademasse überzogenen Süßwaren, mit einem Transportband, auf dem die Warenstücke aufliegend durch den Kühlkanal gefördert und dabei einem vom Eingang des Kühlkanals bis zu dessen Ausgang reichenden Temperaturprofil ausgesetzt werden, und mit mindestens zwei im Kühlkanal ausgebildeten, etwa im Mittelbereich des Kühlkanals mit je einer Eintrittstemperatur beginnenden Kühlstrecken, die an je einen Luft und/oder ein flüssiges Kühlmedium bereitstellenden Kreislauf angeschlossen sind. Das Verfahren kann insbesondere mit Luft als Kühlmedium betrieben werden und dann für eine Oberkühlung der Warenstücke eingesetzt werden. Das Verfahren kann insbesondere mit Wasser als Kühlmedium betrieben werden und dann für eine Bodenkühlung der Warenstücke eingesetzt werden.

Die DE 196 07 055 C2 zeigt und beschreibt einen Kühlkanal für mit Schokolademasse o. dgl. überzogene Warenstücke. Die Warenstücke liegen auf einem Transportband auf und werden so durch den Kühlkanal gefördert. Der Kühlkanal weist zwei Kühlstrecken auf, in denen drei Kühlzonen gebildet sind. Als Kühlmedium wird Luft verwendet. Die mit Hilfe eines Verdampfers gekühlte Luft wird etwa im Mittelbereich des Kühlkanals mit je einer Eintrittstemperatur pro Kühlstrecke zugeleitet. Beide Kühlstrecken werden durch ein Bodenblech unterteilt. Das Kühlmedium der ersten Kühlstrecke strömt im Gegenstrom zunächst oberhalb des Bodenbleches (Strahlungskühlung) und dann unterhalb des Bodenblechs (Konvektionskühlung) in Richtung auf den Eingang des Kühlkanals und wird dort so umgeleitet, daß es im Gleichstrom zu dem Mittelbereich des Kühlkanals zurückgeleitet wird. In der zweiten Kühlstrecke, die etwa den Mittelbereich bis zum Ausgang des Kühlkanals thermisch behandelt, herrscht Konvektionskühlung im Gleichstrom. Somit erfolgt eine schonende Kühlung im Mittelbereich des Kühlkanals. In der zweiten Kühlstrecke wird intensiv gekühlt. Es entsteht somit über die Länge des Kühlkanals ein Temperaturprofil aus örtlich unterschiedlichen Temperaturen des Kühlmediums, mit dem den Warenstücken Wärme entnommen wird. Die mit dem Temperaturprofil erreichbare Abkühlkurve der Temperatur der Warenstücke entspricht im wesentlichen der Erstarrungskurve der Schokolademasse auf den Warenstücken.

Bei konstanter Belastung des Kühlkanals, wenn also eine konstante Anzahl von Warenstücken den Kühlkanal pro Zeiteinheit durchläuft, bildet sich im Beharrungszustand ein entsprechendes Temperaturprofil über die Länge des Kühlkanals aus. Der Kühlkanal erfüllt seine Kühlfunktion, d. h. das Kühlmedium tritt pro Kühlstrecke mit einer entsprechend niedrigen Eintrittstemperatur im Mittelbereich des Kühlkanals ein, nimmt Wärme von den Warenstücken auf und verläßt die Kühlstrecke des Kühlkanals mit entsprechend erhöhter Austrittstemperatur. Für eine konstante Kühlung muß also die Eintrittstemperatur des Kühlmediums im Mittelbereich des Kühlkanals entsprechend niedriger als die Austrittstemperatur gehalten werden. Bei wechselnder Belastung des Kühlkanals ergibt sich die Notwendigkeit, die Kühlwirkung zu verändern bzw. anzupassen. Dies ist insbesondere bei Produktionsunterbrechung und bei Produktionsneubeginn der Fall.

Aus der DE 197 24 639 A1 ist ein Verfahren zum Kühlen von überzogenen Nahrungsmitteln, insbesondere Süß- und Backwaren, bekannt. Die Warenstücke werden auch hier auf einem Transportband aufliegend durch den Kühlkanal gefördert. Es sind zwei Kühlkreisläufe und zwei Kühlstrecken gebildet, wobei das Kühlmedium etwa im Mittelbereich des Kühlkanals zugeführt wird. Für die Bodenkühlung (Kontaktkühlung) wird ein flüssiges Kühlmedium eingesetzt. Die Oberkühlung der Warenstücke (Konvektionskühlung) erfolgt durch Luft als Kühlmedium, und zwar in der ersten Kühlstrecke im Gegenstrom, in der zweiten Kühlstrecke im Gleichstrom. Das Verfahren geht möglicherweise von einer bestimmten, je nach den gerade herrschenden Bedingungen vorgegebenen oder auch konstanten Eintrittstemperatur (Vorlauftemperatur) des Kühlmediums aus. Die Strömungsgeschwindigkeit des Kühlmediums wird geregelt, also verändert, und zwar so, daß eine Temperaturdifferenz zwischen der Austrittstemperatur und der Eintrittstemperatur des Kühlmediums entsteht, bei der die Herstellung des Produktes mit der gewünschten Qualität sichergestellt ist. Je geringer die Strömungsgeschwindigkeit des Kühlmediums ist, desto größer ist die Temperaturdifferenz. Die Veränderung der Geschwindigkeit des Kühlmediums erfolgt durch eine Frequenzregelung, die einen begrenzten Regelbereich zuläßt. Die Regelung der Geschwindigkeit des Kühlmediums ist gleichbedeutend mit der Regelung der Menge des Kühlmediums. Auf diese Weise kann zwar eine Anpassung an sich verändernde Belastungen erreicht werden. In nachteiliger Weise findet jedoch bei einer Veränderung der Geschwindigkeit des Kühlmediums auch eine Strömungsverlagerung in der jeweiligen Kühlstrecke statt, d. h. die Warenstücke werden über die Breite des Kühlkanals bei unterschiedlichen Belastungen unterschiedlich beaufschlagt. Demzufolge werden die Warenstücke auch thermisch unterschiedlich behandelt. Wenn diese Temperaturdifferenz bei der Herstellung eines Produktes mit der gewünschten Qualität festliegt, wird dieser Wert der Temperaturdifferenz als Sollwert für die weitere Produktion in einen Rechner eingegeben, so daß er für die weitere Kühlung dieses Produktes feststeht. All dies geschieht möglicherweise bei Vollast. Wenn dann Produktionsunterbrechungen stattfinden, wird die Kühlmitteleintrittstemperatur geregelt, und zwar derart, daß der Ist-Wert der Austrittstemperatur des Kühlmediums festgestellt und der SollWert entsprechend um diesen Ist-Wert der Temperaturdifferenz verändert wird. Es wird also die Eintrittstemperatur des Kühlmediums unter Aufrechterhaltung einer kleineren Temperaturdifferenz auf einen Wert unterhalb der Austrittstemperatur angehoben, damit die richtige Austrittstemperatur des Kühlmediums beim Einlaufen der Produkte in dem Kühlkanal eingestellt wird. Bei fortdauernder Produktionsunterbrechung, wenn also auch weiterhin keine Warenstücke in den Kühlkanal einlaufen, besteht die Gefahr, daß sich die gewünschte Temperaturdifferenz zwischen Austrittstemperatur und Eintrittstemperatur des Kühlmediums nicht aufrechterhalten läßt. Da keine Warenstücke in den Kühlkanal einlaufen, die Wärme abgeben könnten, wird die Austrittstemperatur des Kühlmediums auf den Wert der Eintrittstemperatur absinken. Wenn dann wieder Warenstücke in den Kühlkanal einlaufen, werden diese zu stark gekühlt.

In der Zeitschrift Süßwaren 1/2-1988, S. 43-47, sind Universal-Kühlkanäle in verschiedenen Ausführungen beschrieben. Auch hier wird das oder die Kühlmedien etwa im Mittelbereich des Kühlkanals zugeleitet, so daß auf diese Art und Weise mindestens zwei Kühlstrecken gebildet werden. Je nach den relativen Bewegungsrichtungen wird im Gegenstrom oder im Gleichstrom gekühlt. Es wird angestrebt, die Warenstücke im Eingangsbereich des Kühlkanals schonend zu kühlen, um die Nachkristallisation in der Schokolademasse zu begünstigen. Etwa im Mittelbereich des Kühlkanals erreicht das Temperaturprofil ein Minimum. Gegen den Ausgang des Kühlkanals steigt die Temperatur wieder etwas an, um auf den Warenstücken keine kondensierende Feuchtigkeit abzuscheiden.

Für eine erfolgreiche Abkühlung von Schokoladeüberzügen müssen bestimmte physikalische Voraussetzungen eingehalten werden.

Im Eingangsbereich eines Kühlkanals ist eine schonende Kühlung mit einer relativ hohen Temperatur des Kühlmediums erforderlich, um nur die Vermehrung bzw. das Wachsen der stabilen Beta V-Kristalle zu fördern, die während der Schokolade-Vorkristallisation entstanden sind. Fällt diese Temperatur des Kühlmediums am Eingang des Kühlkanals wegen geringerer Wärmelast (verringerter Produktdurchsatz, Teillast) ab, erhöht sich die Temperaturdifferenz zwischen dem wärmeren Schokoladeüberzug und der Temperatur des Kühlmediums (Luft oder Wasser), was dann auch zur Bildung der unstabilen nicht gewünschten Beta IV-Kristalle führt.

Die Temperatur der Oberflächen der Warenstücke bei Austritt aus dem Kühlkanal sollte ebenfalls wärmer gehalten werden als z. B. im mittleren Bereich des Kühlkanals, und zwar ebenfalls auf einer konstanten Temperaturhöhe, die so hoch sein muß, daß die Oberfläche der Warenstücke bei Verlassen des Kühlkanals in Bezug auf die Raumluft im Verpackungsbereich nicht den Taupunkt erreicht.

Bei Erreichen des Taupunktes kondensiert Feuchtigkeit auf der Oberfläche der Warenstücke. Geringe Mengen Feuchtigkeit sind optisch auf dem Produkt nicht erkenntlich, führen aber zum sogenannten Zuckerreif (Ausblühungen von Zucker), der durch die Feuchtigkeit aus der Schokolade gelöst wird. Eine zu niedrige Eingangstemperatur führt, wie erwähnt, zur Bildung von unerwünschten unstabilen Beta IV-Kristallen in der Kakaobutter. Da Kakaobutter polymorph ist, kann sie in verschiedenen Kristallformen erstarren (stabile und unstabile Kristalle). Nur die stabilen Kristalle garantieren guten und dauerhaften Glanz, d. h. lange Lagerbeständigkeit. Kakaobutter ist jedoch außerdem monotrop, d. h. unterschiedliche Kristallformen können sich selbständig umwandeln, aber immer nur in einer Richtung, nämlich vom niedrigschmelzenden unstabilen Kristall zum höherschmelzenden stabilen Kristall.

Bilden sich nun durch zu schroffe Kühlung im ersten Teil eines Kühlkanals unstabile Kristalle, so wandeln sich diese nach einigen Wochen automatisch in die stabile Kristallform um. Durch diese Kristallumwandlung bei Kakaobutter in einem Schokoladeprodukt wird Energie freigesetzt, die zu dem gefürchteten Fettreif (Grauschleier) an der Produktoberfläche führt.

Bei diesen und ähnlichen Kühlkanälen sollte man bestrebt sein, über das Kühlmedium in den mindestens zwei Kühlstrecken ein bestimmtes Temperaturprofil über die Länge des Kühlkanals zur Verfügung zu stellen, welches auf die Warenstücke einwirkt. Dieses Temperaturprofil ist am Eingang und am Ausgang des Kühlkanals höher als im Mittelbereich, in welchem ein Minimum durchlaufen wird. Damit wird im Eingangsbereich des Kühlkanals schonend gekühlt, im Mittelbereich stärker, und im Endbereich wird die Temperatur der Warenstücke wieder etwas angehoben. Auf diese Weise wird sichergestellt, daß die Oberflächentemperatur der Warenstücke beim Ausgang aus dem Kühlkanal nicht zu tief liegt, um eine Kondensation von Luftfeuchtigkeit auf den Warenstücken zu verhindern. Wenn sich solche Feuchtigkeit niederschlägt, führt dies insbesondere bei mit Schokolade überzogenen Warenstücken zu einer verringerten Haltbarkeit und zu einer optischen Beeinträchtigung der Warenstücke. Die Warenstücke erscheinen dann glanzlos und grau. Nachdem bei einem Produktionsneustart eine Reihe von Warenstücken den Kühlkanal durchlaufen haben und eine Anpassung an eine konstante Belastung des Kühlkanals erreicht ist, erfüllt der Kühlkanal seine ordnungsgemäße Funktion, d. h. die Warenstücke werden richtig gekühlt, besitzen auf ihrer Oberfläche den erforderlichen Glanz und die Festigkeit, wie sie für eine sich möglicherweise bald anschließende Verpackung erforderlich ist. Wenn jedoch die Ware zum Kühlkanal ausbleibt oder eine Produktionsunterbrechung stromauf eintritt, wird von dem Kühlmedium keine Wärme mehr aufgenommen und abgeführt, so daß es zu keiner Erwärmung des Kühlmediums kommt. Dies bedeutet, daß die Endtemperatur des Kühlmediums in sehr kurzer Zeit im wesentlichen der Anfangstemperatur des Kühlmediums entspricht. Die Temperatur liegt entsprechend niedrig. Werden dann wieder Warenstücke in den Kühlkanal eingeführt, so werden diese Warenstücke zunächst zu stark gekühlt, wobei sich die oben beschriebenen Nachteile einstellen. Die Temperatur des Kühlmediums ist zu niedrig, und zwar sowohl am Eingang in den Kühlkanal wie auch am Ausgang aus dem Kühlkanal.

Der Erfindung liegt die Aufgabe zugrunde, ein Verfahren und eine zur Durchführung des Verfahrens geeignete Vorrichtung der eingangs beschriebenen Art bereitzustellen, mit denen bei Produktionsneustart - auch nach Produktionsunterbrechungen - das Entstehen grauer Warenstücke mit verringerter Haltbarkeit vermieden wird.

Erfindungsgemäß wird dies bei einem Verfahren der eingangs beschriebenen Art dadurch erreicht, daß auch bei wechselnder Belastung des Kühlkanals mit Warenstücken, insbesondere bei Produktionsunterbrechungen,
a) die Temperaturen des Kühlmediums im Bereich des Eingangs und des Ausgangs des Kühlkanals gemessen und konstant gehalten werden,
b) die Menge und damit die Strömungsparameter des Kühlmediums im wesentlichen konstant gehalten wird, und
c) die Eintrittstemperatur des Kühlmediums jeder Kühlstrecke in Abhängigkeit von der Belastung des Kühlkanals verändert wird.

Die Erfindung geht von dem Gedanken aus, nicht mehr die Eintrittstemperatur des jeweiligen Kühlmediums im Mittelbereich des Kühlkanals zu messen und konstant zu halten, sondern stattdessen die Temperatur des Kühlmediums im Bereich des Eingangs des Kühlkanals zu verwenden, also die Stelle, an der die Warenstücke in den Eingang des Kühlkanals einlaufen. Entsprechendes gilt für den Ausgang des Kühlkanals. Auch am Ausgang des Kühlkanals, also an der Stelle, an der die Warenstücke den Kühlkanal verlassen, wird die Temperatur des betreffenden Kühlmediums gemessen und konstant gehalten. In Verbindung damit wird die Menge des Kühlmediums auch bei wechselnder Belastung des Kühlkanals mit Warenstücken konstant gehalten und damit die Strömungsparameter des Kühlmediums nicht verändert. Da der Kühlkanal vorzugsweise so ausgelegt ist, daß die Warenstücke quer zur Förderrichtung über die Arbeitsbreite des Kühlkanals gleichmäßig temperaturmäßig behandelt werden und im übrigen keine Strömungsverlagerung bei wechselnder Belastung des Kühlkanals eintritt, ist davon auszugehen, daß auch im Teillastbereich eine gleichmäßige temperaturmäßige Behandlung der Warenstücke quer zur Arbeitsrichtung vorliegt bzw. aufrechterhalten wird. Da bei wechselnder Belastung des Kühlkanals aber auf irgendeine Weise eine Anpassung erfolgen muß, weil die Menge der abzuführenden Wärme sich ändert, wird dies nunmehr dadurch erreicht, daß die Eintrittstemperatur des Kühlmediums jeder Kühlstrecke im Mittelbereich des Kühlkanals den jeweils veränderten Bedingungen angepaßt wird. Dies bedeutet, daß bei Produktionsunterbrechungen, bei denen also überhaupt keine Warenstücke durch den Kühlkanal wandern, die Eintrittstemperatur des Kühlmediums jeder Kühlstrecke auf die insoweit konstant gehaltene Temperatur des Kühlmediums im Bereich des Eingangs des Kühlkanals angehoben wird. Entsprechendes gilt für den Ausgang des Kühlkanals. Mit dem neuen Kühlkanal entsteht selbst hinsichtlich der ersten Produktreihen, die den Kühlkanal nach einer Produktionsunterbrechung wieder durchlaufen, ein hochwertiges Produkt mit vollem Glanz, großer Haltbarkeit und sofortiger Verpackungsmöglichkeit. Die Produktion von Ausschuß oder minderwertiger Qualität wird beseitigt.

Eine besonders einfache Realisierungsmöglichkeit dieses Verfahrens sieht vor, daß unter Benutzung der Temperaturen des Kühlmediums im Bereich des Eingangs und des Ausgangs des Kühlkanals als Führungsgrößen die Eintrittstemperaturen des Kühlmediums jeder Kühlstrecke durch Veränderung der Leistung jedes Wärmetauschers jeder Kühlstrecke oder durch Modulation der Temperatur bei flüssigen Kühlmedien verändert werden. Damit herrscht in produktionsfreien Zeiten zumindest in den einzelnen Kühlstrecken eines Kühlkanals eine konstante Kühlmitteltemperatur auf gleichem Niveau. Da die Temperatur des Kühlmediums am Eingang und am Ausgang des Kühlkanals aber nicht gleich hoch sein muß, können die einzelnen Kühlstrecken mit unterschiedlichen Temperaturen - jeweils über die jeweilige Kühlstrecke konstant - gefahren werden. Die Veränderung der Eintrittstemperaturen der Kühlmedien der jeweiligen Kühlstrecken ist in relativ kurzer Zeit möglich, da beispielsweise bei einem Produktionsneustart der Kühlkanal nicht sofort mit Warenstücken belastet wird, die einer Vollast im Beharrungszustand entspricht. Die in den Kühlkanal einlaufenden Warenstücke benötigen die Durchlaufszeit einer Reihe Warenstücke, bis ggf. die volle Leistung erreicht wird. Es bereitet keine Schwierigkeiten, die Eintrittstemperaturen des jeweiligen Kühlmediums in dieser Zeit anforderungsgemäß zu verändern. Die Erfindung kann nicht nur dann angewendet werden, wenn ein Kühlkanal in zwei Kühlstrecken unterteilt ist. Die Erfindung kann auch auf die erste und letzte Kühlstrecke angewendet werden, wenn ein Kühlkanal mehr als zwei Kühlstrecken besitzt. Dabei werden die Austrittstemperaturen des jeweiligen Kühlmediums jeder Kühlstrecke auch bei wechselnder Belastung des Kühlkanals mit Warenstücken im wesentlichen konstant gehalten, weil im Rücklauf des Kühlmediums nur eine vergleichsweise geringere Wärmemenge neu aufgenommen und mit abtransportiert wird.

Es besteht die Möglichkeit, daß die Temperaturen des Kühlmediums im Bereich des Eingangs und des Ausgangs des Kühlkanals auf unterschiedlichem Niveau konstant gehalten werden. In der Regel wird die Temperatur des Kühlmediums im Bereich des Eingangs des Kühlkanals höher sein als im Bereich des Ausgangs des Kühlkanals. Allerdings durchschreitet das Temperaturprofil des bzw. der Kühlmedien vom Eingang bis zum Ausgang des Kühlkanals ein Minimum. Im Mittelbereich kann sich auch ein Temperatursprung ergeben. Das Minimum ist bei voller Belastung des Kühlkanals ausgeprägter als im Teillastbereich.

Die Vorrichtung zur Durchführung des Verfahrens mit den eingangs genannten Merkmalen kennzeichnet sich erfindungsgemäß dadurch, daß zur Überwachung der Temperatur des Kühlmediums jeder Kühlstrecke im Bereich des Eingangs und des Ausgangs des Kühlkanals Temperaturfühler vorgesehen sind, daß für jede Kühlstrecke des Kühlkanals je eine Regeleinrichtung vorgesehen ist, mit der auch bei wechselnder Belastung des Kühlkanals mit Warenstücken, insbesondere bei Produktionsunterbrechungen, die Temperaturen des jeweiligen Kühlmediums im Bereich des Eingangs und des Ausgangs des Kühlkanals konstant gehalten und die Eintrittstemperaturen des Kühlmediums jeder Kühlstrecke in Abhängigkeit von der Belastung des Kühlkanals verändert werden.

Wesentlich ist es, die Temperaturfühler für die Steuerung des Kühlkanals an einer anderen Stelle als bisher anzuordnen, nämlich im Bereich des Eingangs und des Ausgangs des Kühlkanals, also dort, wo die Warenstücke in den Kühlkanal ein- bzw. auslaufen. Hier wird die Temperatur konstant gehalten, gleichgültig, ob Warenstücke vorhanden sind oder nicht. Damit steht auch bei jedem Neustart bzw. nach jeder Produktionsunterbrechung gleich die richtige Kühlmitteltemperatur zur Verfügung, die unmittelbar bereits auf die erste in den Kühlkanal einlaufende Reihe der Warenstücke einwirkt. Da sich die Belastung des Kühlkanals dabei zunehmend erhöht, also mehr Wärme abgeführt werden muß, wird die Eintrittstemperatur des Kühlmediums jeder Kühlstrecke im Mittelbereich des Kühlkanals den sich jeweils ändernden Bedingungen angepaßt. Dies kann so geschehen, bis der Kühlkanal wiederum unter voller Belastung betrieben wird. Bei Vollast ist die größte Temperaturdifferenz zwischen der Eintrittstemperatur des Kühlmediums und der Temperatur des Kühlmediums am Eingang des Kühlkanals vorhanden. Entsprechendes gilt für den Ausgang des Kühlkanals.

Die Temperaturfühler sollten am Eingang und am Ausgang des Kühlkanals in dem Raum des Kühlkanals angeordnet sein, den auch die Warenstücke durchlaufen. Die Temperaturfühler sind damit in einem von Luft durchströmten Raum angeordnet. An dieser Stelle machen sich Temperaturänderungen infolge Veränderung der Eintrittstemperatur des Kühlmediums sehr schnell bemerkbar, so daß eine hinreichend schnelle Regelung gewährleistet ist, und zwar sowohl bei dem Ausbleiben von Warenstücken als auch bei dem Wiedereinfahren von Warenstücken in den Kanal. Da die Temperatur des Kühlmediums am Eingang der Warenstücke in den Kühlkanal konstant gehalten wird und somit auf den gewünschten optimalen Wert eingestellt werden kann, liegt in allen Betriebszuständen eine sofortige Arbeitsbereitschaft bzw. die Sicherheit vor, daß sämtliche Warenstücke, gleich unter welchen Umständen sie in den Kühlkanal einlaufen, zumindest an diesem Ort temperaturmäßig richtig behandelt werden. Die Temperatur des Kühlmediums Luft am Eintritt der Warenstücke in den Kühlkanal ist damit nicht mehr zu kalt, wie dies bei Produktionsneustart im Stand der Technik der Fall ist.

Auch die Temperatur des Kühlmediums Luft am Ausgang des Kühlkanals, also an der Stelle, an der die Warenstücke aus dem Kühlkanal austreten, wird konstant gehalten. Damit ist die Gewähr dafür gegeben, daß eine Kondensatbildung von Luftfeuchtigkeit auf den Warenstücken nach dem Austritt aus dem Kühlkanal vermieden wird. Die Temperaturfühler sind also im Luftstrom der Oberkühlung der beiden Kühlstrecken und/oder im Strom des flüssigen Kühlmediums der Bodenkühlung angeordnet. Die Eintrittstemperatur des Kühlmediums Luft und die Austrittstemperatur werden dagegen freigegeben, d. h. können im Rahmen der Regelung verändert werden. Bei voller Belastung des Kühlkanals sind diese Temperaturen gegenüber den Temperaturen des Kühlmediums am Eingang und Ausgang des Kühlkanals jeweils abgesenkt. Für die Zeit einer Produktionsunterbrechung wird die Eintrittstemperatur und damit auch die Austrittstemperatur des Kühlmediums im Mittelbereich des Kühlkanals angehoben, so daß das Temperaturprofil zumindest in jeder Kühlstrecke konstant ist.

Im einzelnen kann vorteilhaft die dem Eingang des Kühlkanals zugeordnete erste Kühlstrecke bei Verwendung von Luft als Kühlmedium für eine Oberkühlung der Warenstücke in zwei Bereiche unterteilt sein, von denen der erste, am Eingang des Kühlkanals endende Bereich zur Konvektionskühlung im Gegenstrom und der zweite, im Mittelbereich beginnende Bereich zur Strahlungskühlung ausgebildet sind. Auch hier wird der verfahrenstechnische Vorteil erreicht, daß die Warenstücke, insbesondere die auf den Warenstücken befindliche Schokolade, am Einlauf in den Kühlkanal auf eine Luft trifft, die um einige Grade höher temperiert ist als in der Mitte des Kühlkanals. Damit ist einerseits die Temperaturdifferenz zwischen der noch wärmeren Schokolade und der Luft als Kühlmedium im Einlaufbereich der Warenstücke noch ausreichend groß, um eine gute Wärmeübertragung sicherzustellen. Andererseits wird eine allzu schockartige Kühlung im Einlaufbereich des Kühlkanals mit den schädlichen Auswirkungen für die Nachkristallisation der temperierten Schokolade vermieden. Auch die Temperaturdifferenz etwa in der Mitte des Kühlkanals wird auf diese Art und Weise kleiner gehalten. Am Ausgang des Kühlkanals ist man bestrebt, die Temperatur der Luft etwas wärmer zu halten als in der Mitte des Kühlkanals. Auf diese Weise treten die Warenstücke aus dem Kühlkanal mit einer nicht allzu tief liegenden Temperatur aus. Eine Kondensation von Luftfeuchtigkeit nach dem Austritt aus dem Kühlkanal auf der Oberfläche der Warenstücke wird verhindert. Während des normalen Produktionsbetriebes stellt sich somit das Temperaturprofil der Luft über die Länge des Kühlkanals automatisch ein. Die dem Ausgang des Kühlkanals zugeordnete zweite Kühlstrecke ist bei Verwendung von Luft als Kühlmedium für eine Oberkühlung der Warenstücke für Konvektionskühlung im Gleichstrom ausgebildet. Damit arbeitet die erste Kühlstrecke im Gegenstromverfahren, die zweite Kühlstrecke im Gleichstromverfahren. Auch diese Kombination ist sinnvoll, um die vergleichsweise stärkere Kühlung der Warenstücke in den Bereich der ersten Kühlstrecke zu legen.

Die dem Eingang des Kühlkanals zugeordnete erste Kühlstrecke und die dem Ausgang des Kühlkanals zugeordnete zweite Kühlstrecke sind bei Verwendung von Wasser als Kühlmedium für eine Bodenkühlung der Warenstücke zur Kontaktkühlung ausgebildet. Es versteht sich, daß in einem Kühlkanal auch gleichzeitig die Oberkühlung und die Bodenkühlung angewendet werden können, die einander entsprechend ergänzen.

Die Erfindung wird anhand eines bevorzugten Ausführungsbeispiels weiter erläutert und beschrieben. Es zeigen:
- Fig. 1: einen Längsschnitt durch einen Kühlkanal mit zwei Kühlstrecken,
- Fig. 2: die Temperaturprofile der Luft und des Wassers über die Länge des Kühlkanals, und
- Fig. 3: ein Blockschaltbild mit wesentlichen Elementen des Kühlkanals.

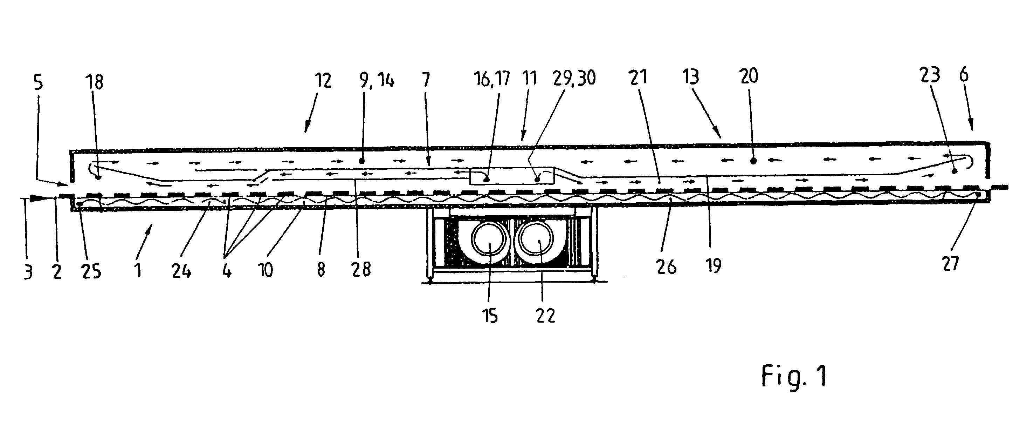

In Fig. 1 ist schematisiert ein Längsschnitt eines Kühlkanals 1 wiedergegeben. Der Kühlkanal 1 ist in seiner grundsätzlichen Anordnung bekannt. Er stellt ein längliches tunnelartiges Gebilde dar, durch welches ein Transportband 2 gemäß Pfeil 3 hindurchbewegt wird. Auf dem Transportband 2 liegen Warenstücke 4 auf. Die Warenstücke 4 sind meist in Querreihen nebeneinander liegend über die Breite des Transportbandes 2 verteilt aufgelegt. Der Kühlkanal 1 weist einen Eingang 5 und einen Ausgang 6 auf. Die Warenstücke 4 laufen am Eingang 5 in den Kühlkanal 1 ein, werden im Kühlkanal 1 temperaturmäßig behandelt und verlassen den Kühlkanal 1 am Ausgang 6 mit dem entsprechend angetriebenen Transportband 2. Der Kühlkanal 1 besitzt einen etwa rechteckigen Querschnitt 7, der durch ein Bodenblech 8, über welches das Transportband 2 läuft, in einen oberen Querschnittsteil 9 und einen unteren Querschnittsteil 10 unterteilt wird. Es versteht sich, daß anstatt eines durchgehenden Bodenbleches 8 auch mehrere Bodenblechabschnitte vorgesehen sein können. Der Kühlkanal 1 kann ansonsten über seine Länge aus einzelnen Modulen zusammengesetzt sein, wie dies an sich bekannt ist. Im oberen Querschnittsteil 9 wird die Oberkühlung verwirklicht, d. h. die Warenstücke 4 werden hier von oben gekühlt. Entsprechend ist im unteren Querschnittsteil 10 die Bodenkühlung angeordnet, durch die im wesentlichen der Bodenbereich der Warenstücke 4 erfaßt wird. Die Oberkühlung im oberen Querschnittsteil 9 verwendet hier Luft als Kühlmedium. Im unteren Querschnittsteil 10 ist die Bodenkühlung mit Wasser als Kühlmedium verwirklicht.

Etwa auf halber Länge des Kühlkanals 1 zwischen seinem Eingang 5 und seinem Ausgang 6 ist ein Mittelbereich 11 gebildet. Der Mittelbereich 11 kann auch etwas in Richtung auf den Eingang 5 oder den Ausgang 6 verschoben angeordnet sein. Auf jeden Fall unterteilt dieser Mittelbereich 11 die Länge des Kühlkanals 1 in zwei Kühlstrecken 12 und 13. Der Kühlkanal 1 kann auch in drei oder mehr Kühlstrecken unterteilt sein. In allen Fällen gibt es eine erste Kühlstrecke 12, die am Eingang 5 des Kühlkanals beginnt. Ebenso ist in allen Fällen eine letzte Kühlstrecke 13 vorgesehen, die am Ausgang 6 endet. Im Mittelbereich 11 können eine oder mehrere zusätzliche Kühlstrecken vorgesehen sein.

Die erste Kühlstrecke 12 erstreckt sich in dem in Fig. 1 dargestellten Ausführungsbeispiel von dem Eingang 5 des Kühlkanals 1 bis in den Mittelbereich 11. Im oberen Querschnittsteil 9 wird Luft 14 als Kühlmedium verwendet. Die Luft 14 wird über ein Gebläse 15 im Mittelbereich 11 des Kühlkanals 1 zugeführt. Es kann hier im Mittelbereich 11 oder ausgangsseitig am Gebläse 15 ein Temperaturfühler 16 vorgesehen sein, um die Eintrittstemperatur 17 der Luft 14 im Bereich der ersten Kühlstrecke 12 zu messen. Die im Bereich der ersten Kühlstrecke 12 verwirklichte Oberkühlung arbeitet teilweise mit Strahlung, teilweise mit Konvektion. Wie durch eine Folge von Pfeilen angedeutet, strömt die Luft 14 der Oberkühlung der Kühlstrecke 12 zunächst oberhalb eines Bodens 28 in Richtung auf den Eingang 5. In diesem zweiten Teil der Kühlstrecke 12 wird die Strahlungskühlung genutzt. Etwa auf halber Länge der Kühlstrecke 12 oder auch über die Länge verstellbar tritt dann die Luft 14 nach unten über und gelangt unmittelbar in einen Bereich des oberen Querschnittsteils 9, in welchem sie die Warenstücke 4 unmittelbar überstreicht. Am Eingang 5 des Kühlkanals 1 ist ein Temperaturfühler 18 vorgesehen, der die Temperatur des Kühlmediums Luft 14 am Eingang 5 des Kühlkanals 1 erfaßt. Die Luft 14 kehrt hier ihre Strömungsrichtung um und fließt im oberen Bereich des Querschnittsteils 9 wieder zurück zum Mittelbereich 11 des Kühlkanals 1. Die Luft 14 der Oberkühlung im Bereich der ersten Kühlstrecke 12 wird damit im wesentlichen im Gegenstrom zu der Durchlaufrichtung gemäß Pfeil 3 des Transportbandes 2 bzw. der Warenstücke 4 geführt.

Auch im Bereich der zweiten Kühlstrecke 13, die sich von dem Mittelbereich 11 bis zum Ausgang 6 des Kühlkanals erstreckt, ist ein Boden 19 vorgesehen, durch den der obere Querschnittsteil 20 oberhalb des Bodenbleches 8 unterteilt wird. Auch in der Kühlstrecke 13 wird im Bereich der Oberkühlung Luft 21 als Kühlmedium verwendet. Die Luft 21 wird über ein Gebläse 22 im Mittelbereich 11 des Kühlkanals 1 zugeführt und strömt zunächst im Gleichstrom gemäß der Pfeilfolge zwischen Transportband 2 und Boden 19 über die Warenstücke 4. Hier wird die Kühlung durch Konvektion genutzt. Die Luft 21 tritt im Mittelbereich 11 des Kühlkanals 1 ein. Hier kann ein Temperaturfühler 29 für die Ermittlung der Eintrittstemperatur 30 der Luft 21 vorgesehen sein. Am Ausgang 6 ist ein Temperaturfühler 23 vorgesehen, um die Temperatur der Luft 21 am Ausgang 6 des Kühlkanals 1 zu erfassen. Die Luft 21 kehrt am Ausgang 6 ihre Strömungsrichtung um und strömt oberhalb des Bodens 19 in den Mittelbereich 11 zurück.

Im Bereich der Bodenkühlung des Kühlkanals 1 wird Wasser als Kühlmedium benutzt. Im Bereich der ersten Kühlstrecke 12 strömt Wasser 24 in den Mittelbereich 11 des Kühlkanals 1 ein und bewegt sich in Richtung auf den Eingang 5 des Kühlkanals 1 zu. Im Bereich dieses Eingangs 5 ist ein Temperaturfühler 25 vorgesehen, um die Temperatur des Wassers 24 am Eingang 5 des Kühlkanals 1 zu erfassen. Die zweite Kühlstrecke 13 ist im Bereich der Bodenkühlung ähnlich aufgebaut. Auch hier wird im Mittelbereich 11 Wasser 26 zugeführt. Dieses strömt unterhalb des Bodenblechs 8 in Richtung auf den Ausgang 6 des Kühlkanals. Dort ist im unteren Querschnittsbereich ein Temperaturfühler 27 vorgesehen, um die Temperatur des Wassers 26 am Ausgang 6 des Kühlkanals 1 zu erfassen.

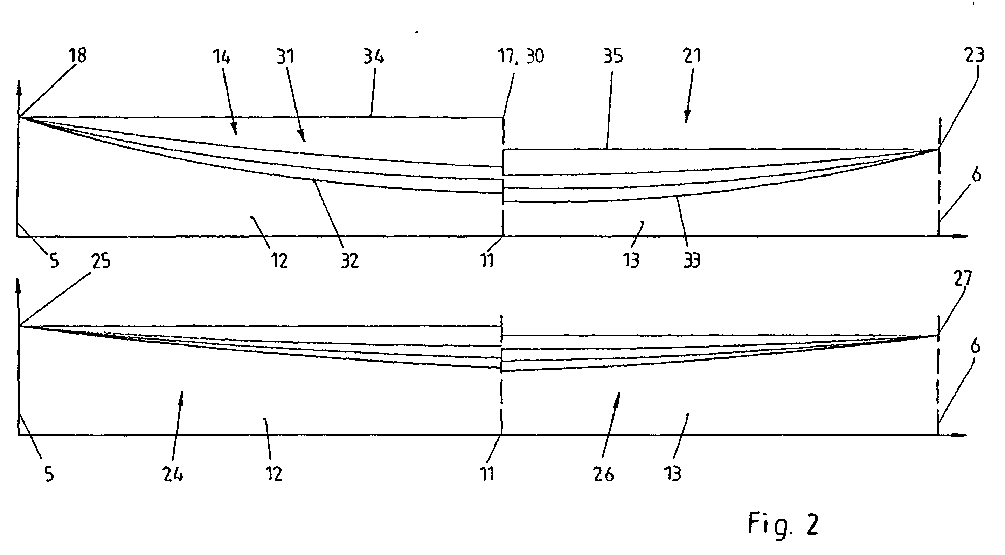

In Fig. 2 sind Temperaturprofile über die Länge des Kühlkanals 1 wiedergegeben. Im oberen Teil der Fig. 2 sind Temperaturprofile 31 der Luft 14 im Bereich der ersten Kühlstrecke 12 und der Luft 21 im Bereich der zweiten Kühlstrecke 13 angedeutet. Die Temperaturprofile 31 erstrecken sich vom Eingang 5 des Kühlkanals 1 entlang der ersten Kühlstrecke 12 bis zum Mittelbereich 11 und dann über die zweite Kühlstrecke 13 bis zum Ausgang 6 des Kühlkanals 1. Die unterste Linie 32 im Bereich der ersten Kühlstrecke 12, die sich in der untersten Linie 33 im Bereich der zweiten Kühlstrecke 13 fortsetzt, entspricht dem Zustand bei Vollast des Kühlkanals, wenn also die Anzahl der Warenstücke 4, für die der Kühlkanal 1 ausgelegt ist, den Kühlkanal 1 durchlaufen und dabei thermisch behandelt werden. Die oberste Linie 34 im Bereich der Kühlstrecke 12, die in der obersten Linie 35 im Bereich der Kühlstrecke 13 ihre Fortsetzung findet, entspricht einer Produktionsunterbrechung, also einem Zustand, bei dem keine Warenstücke 4 den Kühlkanal 1 durchlaufen. Für den Teillastbereich sind weitere Linien angegeben. Man erkennt aus dem oberen Teil der Fig. 2, daß die Temperatur der Luft 14 am Eingang 5 des Kühlkanals 1, die über den Temperaturfühler 18 gemessen wird, auch bei wechselnder Belastung des Kühlkanals 1 konstant gehalten wird. Dagegen wird die Eintrittstemperatur 17 der Luft 14 im Mittelbereich 11 der Belastung des Kühlkanals 1 angepaßt. Bei Produktionsunterbrechung, wenn sich also keine Warenstücke 4 in dem Kühlkanal 1 befinden, wird die Eintrittstemperatur 17 der Luft 14 auf den Wert der über den Temperaturfühler 18 am Eingang 5 des Kühlkanals gemessenen Wert der Luft angehoben. Entsprechendes gilt bezüglich des Ausgangs 6 des Kühlkanals 1 und damit in der zweiten Kühlstrecke 13. Auch hier entspricht die unterste Linie 23 dem Vollastzustand des Kühlkanals 1. In produktionsfreien Zeiten wird die Eintrittstemperatur 30 der Luft 21 im Mittelbereich 11 auf den Temperaturwert am Ausgang 6 angehoben. Das Temperaturprofil 31 wird im Bereich des Eingangs 5 und des Ausgangs 6 in seinen Temperaturwerten konstant gehalten, während im Mittelbereich 11 bei Vollast und im Teillastbetrieb ein Minimum durchlaufen wird. Bei Produktionsunterbrechung ergibt sich ein abgestuftes Temperaturprofil gemäß den Linien 34 und 35.

Entsprechendes gilt auch für die Bodenkühlung, die im unteren Bereich der Fig. 2 dargestellt ist. Es ist hier die Temperatur des Wassers 24 bzw. 26 vom Eingang 5 über den Mittelbereich 11 bis zum Ausgang 6 des Kühlkanals 1 dargestellt. Auch hier entspricht die untere Linie der Vollast. Darüber befindliche Linien entsprechen dem Teillastbereich bis hin zu produktionsfreien Zeiten bzw. Produktionsunterbrechungen, bei denen zwar das Transportband 2 durch den Kühlkanal 1 geführt wird, jedoch auf diesem keine Warenstücke 4 aufliegen. Auch hier erkennt man, daß die Temperatur des Wassers 24 am Eingang 5 des Kühlkanals 1 in allen Betriebszuständen konstant gehalten wird. Das gilt auch für die Temperatur des Kühlwassers 26 am Ausgang 6 des Kühlkanals bzw. an dem Temperaturfühler 27.

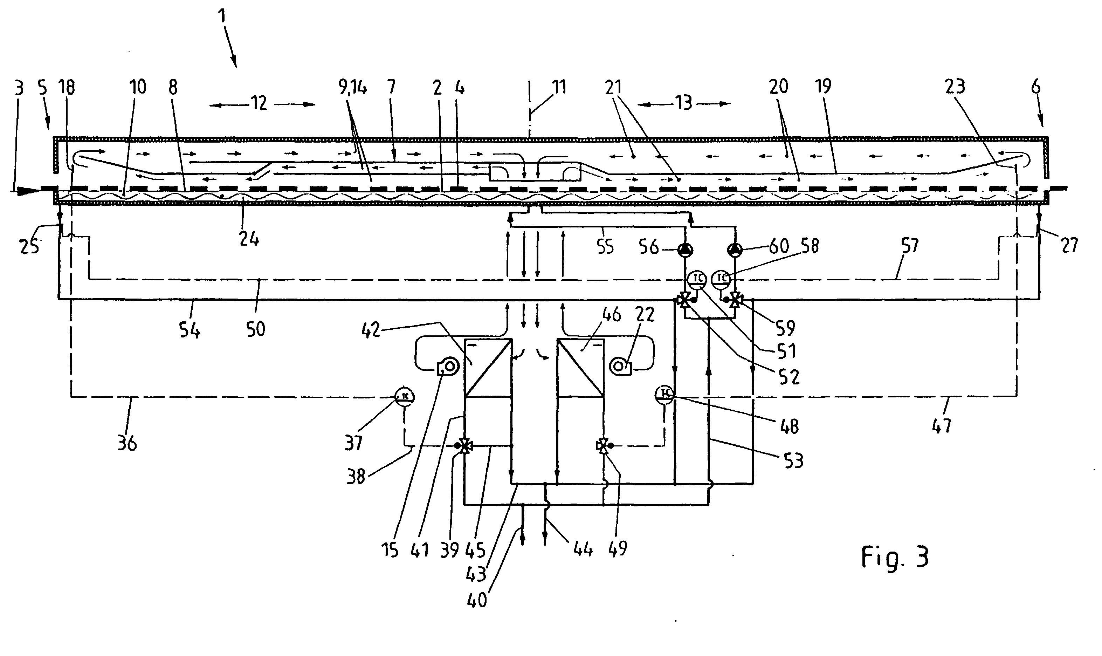

Fig. 3 läßt erkennen, daß die Temperaturfühler 16 und 29 für die Messung der Eintrittstemperaturen 17 und 30 fehlen können. Wesentlich ist dagegen der Temperaturfühler 18 am Eingang 5 des Kühlkanals und der Temperaturfühler 23 am Ausgang 6 des Kühlkanals, jedenfalls soweit es die Oberkühlung betrifft. Der Temperaturfühler 18 steht über eine elektrische Leitung 36 mit einem Temperaturregler 37 in Verbindung, der über eine Leitung 38 ein modulierendes Zweiwegeventil 39 betätigt. Kaltes Wasser z. B. aus einem Leitungsnetz wird über eine Leitung 40 zugeführt und gelangt über das Zweiwegeventil 39 und eine Leitung 41 in einen Wärmetauscher 42. Von dem Wärmetauscher 42 führt eine Leitung 43 in einen Rücklauf 44. Von der Leitung 43 führt weiterhin eine Verbindungsleitung 45 zu dem Zweiwegeventil 39, so daß es damit möglich ist, das Kühlwasser teilweise im Kreis zu führen und dessen Temperatur durch Zumischung von Kaltwasser aus der Leitung 40 zu verändern. Als Führungsgröße, die konstant zu halten ist, dient die Temperatur der Luft am Eingang 5 des Kühlkanals 1, die über den Temperaturfühler 18 gemessen wird. Die Temperatur des Kühlwassers im Wärmetauscher 42 wird damit entsprechend der Belastung verändert. Das Gebläse 15 saugt Luft aus der Atmosphäre oder aus einem Umlauf an und fördert diese mit der entsprechend angepaßten Eintrittstemperatur 17 dem Kühlkanal 1 zu. Diese Kühlluft tritt im Mittelbereich 11 ein und bewegt sich entlang der ersten Kühlstrecke 12 zunächst im Gegenstrom bis zum Eingang 5 des Kühlkanals und dann wiederum zurück zu dem Mittelbereich 11. Wie durch Pfeile angedeutet kann zumindest auch ein Teil der Kühlluft im Kreis geführt werden.

Entsprechendes gilt hinsichtlich der Oberkühlung für die Kühltrecke 13. Das Gebläse 22 fördert die Luft 21 im Kreis. Die Luft 21 wird über einen Wärmetauscher 46 geleitet, der ebenso an die Leitung 40 für Kaltwasser angeschlossen ist. Bei der Leitung 40 kann es sich auch um die Leitung einer Kältemaschine handeln. Der Temperaturfühler 23 am Ausgang 6 des Kühlkanals 1 ist über eine elektrische Leitung 47 mit einem Temperaturregler 48 verbunden, der wiederum ein Zweiwegeventil 49 ansteuert. Mit Hilfe des modulierenden Zweiwegeventils 49 wird die Temperatur des Wärmetauschers 46 verändert bzw. an die Belastung angepaßt. Entsprechend wird auch sekundärseitig die Eintrittstemperatur 30 der Luft 21 verändert, wie dies anhand von Fig. 2 erläutert wurde.

Fig. 3 zeigt auch den Bereich einer gleichzeitig verwirklichten Bodenkühlung. Der Temperaturfühler 25 im Bereich des Eingangs 5 des Kühlkanals 1 erfaßt die Temperatur des Wassers 24 am Eingang 5. Eine elektrische Leitung 50 stellt die Verbindung zu einem Temperaturregler 51 her, der wiederum ein Zweiwegeventil 52 ansteuert. Über eine Leitung 53, die Verbindung zu der Leitung 40 hat, wird kaltes Wasser dem Zweiwegeventil 52 zugeführt. Das Wasser 24 wird im Bereich der ersten Kühlstrecke 12 über eine Leitung 54 im Kreis geführt und gelangt so zu dem Zweiwegeventil 52. Eine Leitung 55, in der eine Pumpe 56 angeordnet ist, führt von dem Zweiwegeventil 52 zum Mittelbereich 11 des Kühlkanals. Die am Temperaturfühler 25 gemessene Temperatur des Wassers 24 am Eingang 5 des Kühlkanals 1 wird konstant gehalten. Die Eintrittstemperatur des Wassers 24 im Mittelbereich 11 wird entsprechend der Belastung des Kühlkanals 1 verändert, wie dies der untere Teil der Fig. 2 zeigt.

Die Bodenkühlung im Bereich der zweiten Kühlstrecke 13 ist entsprechend aufgebaut. Der Temperaturfühler 27 steht über eine elektrische Leitung 57 mit einem Temperaturregler 58 in Verbindung, der wiederum ein Zweiwegeventil 59 ansteuert. Eine Pumpe 60 dient der kontinuierlichen Umwälzung des Kühlmediums im Bereich der Bodenkühlung der Kühlstrecke 13. Sämtliches Kühlmedium, gleich in welchem Kreislauf, wird kontinuierlich umgewälzt, und zwar auch in produktionsfreien Zeiten. Auf diese Art und Weise ist es möglich, die Temperaturen des Kühlmediums am Eingang 5 und am Ausgang 6 konstant zu halten und lediglich im Mittelbereich 11 entsprechend der wechselnden Belastung des Kühlkanals 1 zu variieren.

### BEZUGSZEICHENLISTE

- 1 -: Kühlkanal
- 2 -: Transportband
- 3 -: Pfeil
- 4 -: Warenstück
- 5 -: Eingang
- 6 -: Ausgang
- 7 -: Querschnitt
- 8 -: Bodenblech
- 9 -: Querschnittsteil
- 10 -: Querschnittsteil

- 11 -: Mittelbereich
- 12 -: Kühlstrecke
- 13 -: Kühlstrecke
- 14 -: Luft
- 15 -: Gebläse
- 16 -: Temperaturfühler
- 17 -: Eintrittstemperatur
- 18 -: Temperaturfühler
- 19 -: Boden
- 20 -: Querschnittsteil

- 21 -: Luft
- 22 -: Gebläse
- 23 -: Temperaturfühler
- 24 -: Wasser
- 25 -: Temperaturfühler
- 26 -: Wasser
- 27 -: Temperaturfühler
- 28 -: Boden
- 29 -: Temperaturfühler
- 30 -: Eintrittstemperatur

- 31 -: Temperaturprofil
- 32 -: Linie
- 33 -: Linie
- 34 -: Linie
- 35 -: Linie
- 36 -: Leitung
- 37 -: Temperaturregler
- 38 -: Leitung
- 39 -: Zweiwegeventil
- 40 -: Leitung

- 41 -: Leitung
- 42 -: Wärmetauscher
- 43 -: Leitung
- 44 -: Rücklauf
- 45 -: Verbindungsleitung
- 46 -: Wärmetauscher
- 47 -: Leitung
- 48 -: Temperaturregler
- 49 -: Zweiwegeventil
- 50 -: Leitung

- 51 -: Temperaturregler
- 52 -: Zweiwegeventil
- 53 -: Leitung
- 54 -: Leitung
- 55 -: Leitung
- 56 -: Pumpe
- 57 -: Leitung
- 58 -: Temperaturregler
- 59 -: Zweiwegeventil
- 60 -: Pumpe

## Patentansprüche

1. Verfahren zum Kühlen von Warenstücken, insbesondere von mit Schokolademasse überzogenen Süßwaren, indem die Warenstücke (4) auf einem Transportband (2) aufliegend durch einen Kühlkanal (1) gefördert werden, die Warenstücke (4) während ihres Durchlaufes durch den Kühlkanal (1) einem vom Eingang (5) des Kühlkanals bis zu dessen Ausgang (6) reichenden Temperaturprofil (31) ausgesetzt werden, welches über die Länge des Kühlkanals örtlich unterschiedlich durch Luft (14, 21) und/oder ein flüssiges Kühlmedium (24, 26) bereitgestellt wird, wobei das Kühlmedium unter Ausbildung mindestens zweier Kühlstrecken (12, 13) etwa im Mittelbereich (11) des Kühlkanals (1) mit je einer Eintrittstemperatur (17, 30) pro Kühlstrecke (12, 13) dem Kühlkanal zugeleitet wird, **dadurch gekennzeichnet, daß** auch bei wechselnder Belastung des Kühlkanals (1) mit Warenstücken (4), insbesondere bei Produktionsunterbrechungen,
a) die Temperaturen des Kühlmediums (14, 21; 24, 26) im Bereich des Eingangs (5) und des Ausgangs (6) des Kühlkanals (1) gemessen und konstant gehalten werden,
b) die Menge und damit die Strömungsparameter des Kühlmediums (14, 21; 24, 26) im wesentlichen konstant gehalten wird, und
c) die Eintrittstemperatur (17, 30) des Kühlmediums jeder Kühlstrecke (12, 13) in Abhängigkeit von der Belastung des Kühlkanals (1) verändert wird.

2. Verfahren nach Anspruch 1, **dadurch gekennzeichnet, daß** unter Benutzung der Temperaturen des Kühlmediums im Bereich des Eingangs (5) und des Ausgangs (6) des Kühlkanals (1) als Führungsgrößen die Eintrittstemperaturen (17, 30) des Kühlmediums jeder Kühlstrecke (12, 13) durch Veränderung der Leistung jedes Wärmetauschers (42, 46) jeder Kühlstrecke oder durch Modulation der Temperatur bei flüssigen Kühlmedien verändert werden.

3. Verfahren nach Anspruch 1 oder 2, **dadurch gekennzeichnet, daß** die Austrittstemperaturen des jeweiligen Kühlmediums (14, 21, 24, 26) jeder Kühlstrecke (12, 13) auch bei wechselnder Belastung des Kühlkanals (1) mit Warenstücken (4) konstant gehalten werden.

4. Verfahren nach den Ansprüchen 1 bis 3, **dadurch gekennzeichnet, daß** die Temperaturen des Kühlmediums (14, 21, 24, 26) im Bereich des Eingangs (5) und des Ausgangs (6) des Kühlkanals (1) auf unterschiedlichem Niveau konstant gehalten werden.

5. Vorrichtung zur Durchführung des Verfahrens nach den Ansprüchen 1 bis 4, mit einem Kühlkanal (1) zum Kühlen von Warenstücken (4), insbesondere von mit Schokolademasse überzogenen Süßwaren, mit einem Transportband (2), auf dem die Warenstücke (4) aufliegend durch den Kühlkanal (1) gefördert und dabei einem vom Eingang (5) des Kühlkanals (1) bis zu dessen Ausgang (6) reichenden Temperaturprofil (31) ausgesetzt werden, und mit mindestens zwei im Kühlkanal (1) ausgebildeten, etwa im Mittelbereich (11) des Kühlkanals (1) mit je einer Eintrittstemperatur (17, 30) beginnenden Kühlstrecken (12, 13), die an je einen Luft (14, 21) und/oder ein flüssiges Kühlmedium (24, 26) bereitstellenden Kreislauf angeschlossen sind, **dadurch gekennzeichnet, daß** zur Überwachung der Temperatur des Kühlmediums jeder Kühlstrecke (12, 13) im Bereich des Eingangs (5) und des Ausgangs (6) des Kühlkanals (1) Temperaturfühler (18, 23; 25, 27) vorgesehen sind, daß für jede Kühlstrecke (12, 13) des Kühlkanals (1) je eine Regeleinrichtung (37, 39, 42; 48, 49, 46) vorgesehen ist, mit der auch bei wechselnder Belastung des Kühlkanals (1) mit Warenstücken (4), insbesondere bei Produktionsunterbrechungen, die Temperaturen des jeweiligen Kühlmediums im Bereich des Eingangs (5) und des Ausgangs (6) des Kühlkanals (1) konstant gehalten und die Eintrittstemperaturen (17, 30) des Kühlmediums jeder Kühlstrecke (12, 13) in Abhängigkeit von der Belastung des Kühlkanals (1) verändert werden.

6. Vorrichtung nach Anspruch 5, **dadurch gekennzeichnet, daß** die Temperaturfühler (18, 23) am Eingang (5) und am Ausgang (6) des Kühlkanals (1) in dem Raum des Kühlkanals angeordnet sind, den auch die Warenstücke (4) durchlaufen.

7. Vorrichtung nach Anspruch 6, **dadurch gekennzeichnet, daß** die Temperaturfühler (18, 23; 25, 27) im Luftstrom der Oberkühlung der beiden Kühlstrecken (12, 13) und/oder im Strom des flüssigen Kühlmediums (24, 26) der Bodenkühlung angeordnet sind.

8. Vorrichtung nach den Ansprüchen 5 bis 7, **dadurch gekennzeichnet, daß** die dem Eingang (5) des Kühlkanals (1) zugeordnete erste Kühlstrecke (12) bei Verwendung von Luft (14) als Kühlmedium für eine Oberkühlung der Warenstücke (4) in zwei Bereiche unterteilt ist, von denen der erste, am Eingang (5) des Kühlkanals (1) endende Bereich zur Konvektionskühlung im Gegenstrom und der zweite, im Mittelbereich (11) beginnende Bereich zur Strahlungskühlung ausgebildet sind.

9. Vorrichtung nach den Ansprüchen 5 bis 7, **dadurch gekennzeichnet, daß** die dem Ausgang (6) des Kühlkanals (1) zugeordnete zweite Kühlstrecke (13) bei Verwendung von Luft (21) als Kühlmedium für eine Oberkühlung der Warenstücke (4) für Konvektionskühlung im Gleichstrom ausgebildet ist.

10. Vorrichtung nach den Ansprüchen 5 bis 7, **dadurch gekennzeichnet, daß** die dem Eingang (5) des Kühlkanals (1) zugeordnete erste Kühlstrecke (12) und die dem Ausgang (6) des Kühlkanals (1) zugeordnete zweite Kühlstrecke (13) bei Verwendung von Wasser (24, 26) als Kühlmedium für eine Bodenkühlung der Warenstücke (4) zur Kontaktkühlung ausgebildet sind.

## Claims

1. A method for cooling articles, especially articles being covered with a chocolate mass, comprising the steps of:
transporting the articles (4) to be cooled on a conveyer belt (2) through a cooling channel (1), the articles (4) during the passage through the cooling channel (1) being exposed to a temperature profile (31) extending from the entrance (5) to the exit (6) of the cooling channel and being provided in different manner along the length of the cooling channel by air (14, 21) and/or a liquid cooling medium (24, 26), the cooling medium entering as at least one first cooling medium having a first entering temperature (17) into the middle region (11) of the cooling channel (1) to flow through a first cooling stretch (12) of the cooling channel and as at least one second cooling medium having a second entering temperature (30) into the middle region (11) of the cooling channel (1) to flow through a second cooling stretch (13) of the cooling channel, **characterised in that** during the changing loads of the cooling channel (1) with articles (4), especially during stops in the production,
a) determining and keeping constant the temperature of the cooling medium (14, 21; 24, 26) in the region of the entrance (5) and the exit (6) of the cooling channel (1),
b) keeping the amount and the flowing parameters of the cooling medium (14, 21; 24, 26) substantially constant, and
c) controlling the entering temperature (17, 30) of the cooling medium of each cooling stretch (12, 13) in response to the load of the cooling channel.

2. Method of claim 1, wherein the entering temperatures (17, 30) of the cooling medium of each cooling stretch (12, 13) are varied by changing the performance of each heat exchanger (42, 46) of each cooling stretch or by modulation of the temperature of the liquid cooling medium, using the temperatures of the cooling medium in the region of the entrance (5) and the exit (6) of the cooling channel (1) as command variables.

3. Method of claim 1 or 2, wherein the exit temperatures of the respective cooling medium (14, 21, 24, 26) of each cooling stretch (12, 13) are kept constant during changing load of the cooling channel (1) with articles (4).

4. Method of claims 1 to 3, wherein the temperatures of the cooling medium (14, 21, 24, 26) in the region of the entrance (5) and the exit (6) of the cooling channel (1) are kept constant on differing levels.

5. Apparatus for implementing the method according the claims 1 to 4, comprising a cooling channel (1) to cool articles (4), especially articles being covered with a chocolate mass, the cooling channel including a conveyer belt (2) for transporting the articles (4) through the cooling channel (1), the articles (4) in the cooling channel (1) being exposed to a temperature profile (31) extending approximately from the entrance (5) to the exit (6) of the cooling channel, the cooling channel (1) including at least two cooling stretches (12, 13) extending in the middle region (11) of the cooling channel (1) at first entering temperatures (17, 30) each, the cooling stretches being connected to cooling circuits of air (14, 21) and/or liquid cooling medium (24, 26), wherein temperature sensors (18, 23; 25, 27) are arranged in the region of the entrance (5) and the exit (6) of the cooling channel (1) for sensing the temperature of the cooling medium in the region of the entrance of the cooling channel, control devices (37, 39, 42; 48, 49, 46) are provided for each cooling stretch (12, 13) of the cooling channel (1) to keep constant the temperatures of the respective cooling medium in the region of the entrance (5) and the exit (6) of the cooling channel (1) and to vary the entering temperatures (17, 30) of the cooling medium of each cooling stretch (12, 13) in response to the load of articles being located in the cooling channel.

6. The apparatus of claim 5, wherein the temperature sensors (18, 23) are arranged directly in the region of the entrance (5) and the exit (6) of the cooling channel (1) through which the articles are transported.

7. The apparatus of claim 6, wherein the temperature sensors (18, 23; 25, 27) are arranged in the stream of air of the upper cooling of the two cooling stretches (12, 13) and/or in the stream of the liquid cooling medium (24, 26) of the bottom cooling.

8. The apparatus of claims 5 to 7, wherein when using air (14) as cooling medium for an upper cooling of the articles (4) the first cooling stretch (12) being allocated to the entrance (5) of the cooling channel (1) includes two separate sections, the first section ending at the entrance (5) of the cooling channel (1) and being designed and arranged to cool the articles due to convection in a an inverse flow direction with respect to the movement of the articles, and the second section beginning in the middle region of the cooling channel and being designed and arranged to cool the articles due to radiation.

9. The apparatus of claims 5 to 7, wherein when using air (21) as cooling medium for an upper cooling of the articles (4) the second cooling stretch (13) being allocated to the exit (6) of the cooling channel (1) is designed and arranged to cool the articles (4) due to convection in a flow direction corresponding to the movement of the articles.

10. The apparatus of claims 5 to 7, wherein when using water (24, 26) as cooling medium for a bottom cooling of the articles (4) the first cooling stretch (12) being allocated to the entrance (5) of the cooling channel (1) the second cooling stretch (13) being allocated to the exit (6) of the cooling channel (1) are designed and arranged to cool the articles (4) due to contact cooling.

## Revendications

1. Procédé de refroidissement de morceaux de matière, en particulier de confiserie enrobée de chocolat, dans lequel les morceaux de matière (4) posés sur une bande transporteuse (2) sont transportés dans un canal de refroidissement (1), les morceaux de matière (4) étant exposés pendant leur passage dans le canal de refroidissement (1) à un profil de température (31) qui s'étend depuis l'entrée (5) du canal de refroidissement jusqu'à sa sortie (6) et qui est établi de façon à varier localement suivant la longueur du canal de refroidissement par de l'air (14, 21) et/ou un agent liquide de refroidissement (24, 26), l'agent de refroidissement étant amené dans le canal de refroidissement en formant au moins deux parcours de refroidissement (12, 13) sensiblement dans la zone centrale (11) du canal de refroidissement (1), avec chaque fois une température d'entrée (17, 30) par parcours de refroidissement (12; 13), **caractérisé en ce que** même lorsque la charge du canal de refroidissement (1) en morceaux de matière (4) varie, et en particulier lors d'interruptions de production,
a) les températures de l'agent de refroidissement (14, 21 ; 24, 26) dans la région de l'entrée (5) et de la sortie (6) du canal de refroidissement (1) sont mesurées et maintenues constantes,
b) le débit et donc les paramètres d'écoulement de l'agent de refroidissement (14, 21 ; 24, 26) sont maintenus essentiellement constants, et
c) la température d'entrée (17, 30) de l'agent de refroidissement dans chaque parcours de refroidissement (12, 13) est modifiée en fonction de la charge du canal de refroidissement (1).

2. Procédé selon la revendication 1, **caractérisé en ce que** les températures d'entrée (17, 30) de l'agent de refroidissement dans chaque parcours de refroidissement (12, 13) sont modifiées par modification de la capacité de chaque échangeur de chaleur (42, 46) de chaque parcours de refroidissement ou par modulation de la température au cas où les agents de refroidissement sont liquides, en utilisant comme grandeurs de commande les températures de l'agent de refroidissement dans la région de l'entrée (5) et dans la région de la sortie (6) du canal de refroidissement (1).

3. Procédé selon la revendication 1 ou 2, **caractérisé en ce que** les températures de sortie de l'agent de refroidissement (14, 21, 24, 26) de chaque parcours de refroidissement (12, 13) sont maintenues constantes même en cas de variation de la charge du canal de refroidissement (1) en morceaux de matière (4).

4. Procédé selon l'une des revendications 1 à 3, **caractérisé en ce que** les températures de l'agent de refroidissement (14, 21, 24, 26) sont maintenues à des niveaux constants mais différents dans la région de l'entrée (5) et dans la région de la sortie (6) du canal de refroidissement (1).

5. Dispositif en vue de la mise en oeuvre du procédé selon l'une des revendications 1 à 4, avec un canal de refroidissement (1) pour le refroidissement des morceaux de matière (4), en particulier de confiserie enrobée de chocolat, avec une bande transporteuse (2) sur laquelle les morceaux de matière (4) sont posés et sont transportés dans le canal de refroidissement (1) en étant exposés pendant leur passage dans le canal de refroidissement (1) à un profil de température (31) qui s'étend depuis l'entrée (5) du canal de refroidissement jusqu'à sa sortie (6), et avec au moins deux parcours de refroidissement (12, 13) ménagés dans le canal de refroidissement (1), débutant sensiblement dans la région centrale (11) du canal de refroidissement (1), chacun avec une température d'entrée (17, 30), chacun étant raccordé à un circuit délivrant de l'air (14, 21) et/ou un agent liquide de refroidissement (24, 26), **caractérisé en ce que** des sondes de température (18, 23 ; 25, 27) sont prévues dans la région de l'entrée (5) et dans la région de la sortie (6) du canal de refroidissement (1) pour la surveillance de la température de l'agent de refroidissement dans chaque parcours de refroidissement (12, 13), **en ce qu'**un dispositif de régulation (37, 39, 42 ; 48, 49, 46) est prévu pour chaque parcours de refroidissement respectif (12, 13) du canal de refroidissement (1), avec lequel même en cas de variation de charge du canal de refroidissement (1) en morceaux de matière (4), en particulier en cas d'interruption de production, les températures de l'agent de refroidissement concerné sont maintenues constantes dans la région de l'entrée (5) et dans la région de la sortie (6) du canal de refroidissement (1), et la température d'entrée (17, 30) de l'agent de refroidissement de chaque parcours de refroidissement (12, 13) est modifiée en fonction de la charge du canal de refroidissement (1).

6. Dispositif selon la revendication 5, **caractérisé en ce que** les sondes de température (18, 23) sont disposées à l'entrée (5) et à la sortie (6) du canal de refroidissement (1), dans l'espace du canal de refroidissement qui est également traversé par les morceaux de matière (4).

7. Dispositif selon la revendication 6, **caractérisé en ce que** les sondes de température (18, 23 ; 25, 27) sont disposées dans l'écoulement d'air du refroidissement supérieur des deux parcours de refroidissement (12, 13) et/ou dans l'écoulement de l'agent liquide de refroidissement (24, 26) du refroidissement inférieur.

8. Dispositif selon les revendications 5 à 7, **caractérisé en ce que** lorsque l'on utilise de l'air (14) comme agent de refroidissement pour le refroidissement des morceaux de matière (4) par le haut, le premier parcours de refroidissement (12) associé à l'entrée (5) du canal de refroidissement (1) est divisé en deux zones dont la première, qui se termine à l'entrée (5) du canal de refroidissement (1), est configurée pour un refroidissement par convection à contre-courant et dont la deuxième, qui commence dans la région centrale (11), est configurée pour un refroidissement par rayonnement.

9. Dispositif selon les revendications 5 à 7, **caractérisé en ce que** lorsque l'on utilise de l'air (21) comme agent de refroidissement pour le refroidissement des morceaux de matière (4) par le haut, le deuxième parcours de refroidissement (13) associé à la sortie (6) du canal de refroidissement (1) est configuré pour un refroidissement par convection à courants parallèles.

10. Dispositif selon les revendications 5 à 7, **caractérisé en ce que** lorsque l'on utilise de l'eau (24, 26) comme agent de refroidissement pour le refroidissement des morceaux de matière (4) par le bas, le premier parcours de refroidissement (12) associé à l'entrée (5) du canal de refroidissement (1) et le deuxième parcours de refroidissement (13) associé à la sortie (6) du canal de refroidissement (1) sont configurés pour un refroidissement par contact.
